# EUROPÄISCHE PATENTSCHRIFT

(11) **EP 3 242 131 B1**
(45) Veröffentlichungstag und Bekanntmachung des Hinweises auf die Patenterteilung: **07.03.2018**
(21) Anmeldenummer: 17157328.0
(22) Anmeldetag: 22.02.2017
(51) Int. Cl.: G01N 30/60, B25B 5/00, B01D 15/22, F16B 2/12, F16B 2/18, G01N 30/88

(54) **EINSPANNVORRICHTUNG FÜR EINE PROBENVORBEREITUNG**
JIG FOR SAMPLE PREPARATION
DISPOSITIF DE FIXATION POUR UNE PRÉPARATION D'ÉCHANTILLONS

(30) Priorität: 04.05.2016 DE 102016108357
(43) Veröffentlichungstag der Anmeldung: 08.11.2017
(73) Patentinhaber: LCTECH Gesellschaft für Chromatographie und Automatisierung mbH, 84419 Obertaufkirchen (DE)
(72) Erfinder: BRANDLHUBER, Martin, 84427 St. Wolfgang (DE)
(74) Vertreter: Tetzner, Michael

(56) Entgegenhaltungen:
- EP-A2- 0 078 435
- EP-B1- 2 767 828
- US-A1- 2007 084 982

## Beschreibung

Die Erfindung betrifft eine Einspannvorrichtung zum Einspannen von wenigstens zwei Bearbeitungsgeräten für eine Probenvorbereitung, insbesondere zur Analytik von chemischen Stoffen, wie beispielsweise für eine Chromatographie.

Eine platzsparende, flexible und einfach zu bedienende Einspannvorrichtung zum Einspannen von mehreren Säulen für eine Probenvorbereitung ist beispielsweise aus der EP 2 767 828 B1 bekannt. Sie weist mehrere Spannblöcke und einen Verschiebemechanismus zum Verschieben eines Spannblocks relativ zu einem gegenüberliegend angeordneten Spannblock zwischen einer Öffnungsstellung und einer Einspannstellung auf. Dabei kann in der Öffnungsstellung eine Säule zwischen zwei gegenüberliegend angeordneten Spannblöcken angesetzt werden, während in der Einspannstellung die eingesetzte Säule zwischen den gegenüberliegend angeordneten Spannblöcken zur Herstellung einer Fluidverbindung zwischen Säule und wenigstens einem der gegenüberliegend angeordneten Spannblöcken eingespannt ist. Dabei sind wenigstens drei Spannblöcke in einer Reihe hintereinander auf einer Führungsschiene gehaltert, sodass wenigstens zwei Säulen in axialer Richtung hintereinander zwischen den Spannblöcken eingespannt werden können. Die auf der Führungsschiene gehalterten, gleitverschieblichen Spannblöcke stehen über Kopplungsmittel mit dem Verschiebemechanismus derart in Verbindung, dass eine Betätigung des Verschiebemechanismus von der Einspannstellung in die Öffnungsstellung eine Verschiebung aller gleitverschieblichen Spannblöcke bewirkt und dabei die Säulen freigegeben werden.

Durch die Anordnung der Spannblöcke auf der Führungsschiene kann die Einspannvorrichtung sehr schnell und unkompliziert auf unterschiedliche Säulenlängen angepasst werden. Ein weiterer Vorteil der axialen Anordnung besteht auch darin, dass die Fluidverbindung zwischen den Säulen, sofern gewünscht, vergleichsweise kurz ist.

Bei der beschriebenen Ausgestaltung ist einer der Spannblöcke ortsfest auf der Führungsschiene angeordnet, während wenigstens zwei weitere Spannblöcke gleitverschieblich auf der Führungsschiene gehaltert sind. Dabei bildet der ortsfest auf der Führungsschiene angeordnete Spannblock das eine Ende der Reihe der hintereinander angeordneten Spannblöcke, während zumindest der letzte, gleitverschiebliche Spannblock am anderen Ende der Reihe mit dem Verschiebemechanismus zur Verschiebung desselben relativ zum ortsfesten Spannblock in Wirkverbindung steht. Eine Verschiebung des mit dem Verschiebemechanismus in Verbindung stehenden gleitverschieblichen Spannblocks in Richtung des ortsfesten Spannblocks bewirkt dabei auch eine Verschiebung aller dazwischen angeordneten Spannblöcke zusammen mit den eingesetzten Säulen bis in die Einspannstellung. Mit der Verschiebung eines Spannblocks können daher eine Vielzahl von Säulen fluiddicht eingespannt werden. Um den durch die Spannblöcke auf die Säulen erzeugten Druck zu begrenzen, kann der Verschiebemechanismus wenigstens eine kraftbegrenzende Ausgleichsfeder aufweisen, wobei eine durch den Verschiebemechanismus erzeugte Verschiebekraft über die Ausgleichsfeder auf den wenigstens einen gleitverschieblichen Spannblock übertragen wird. Durch diese Ausgleichsfeder wird die auf die Säulen übertragene Einspannkraft begrenzt und vermeidet dadurch eine Überlastung/Beschädigung der Säulen.

Aus der US 2007/084982 A1 ist eine Einspannvorrichtung zum Einspannen von mehreren Bearbeitungsgeräten bekannt, wobei wenigstens zwei Spannblockpaare mit jeweils zwei gegenläufig beweglichen Spannblöcken vorgesehen sind und jedes Spannblockpaar zur Aufnahme jeweils eines der Bearbeitungsgeräte zwischen den zwei gegenläufig beweglichen Spannblöcken ausgebildet ist. Gemäß einem Ausführungsbeispiel können die beiden Spannblöcke eines Spannblockpaars mittels einer Gewindespindel und einem Motor gegenläufig verschoben werden.

Der Erfindung liegt nun die Aufgabe zugrunde, die Handhabung der Einspannvorrichtung, insbesondere für eine automatisierte Bestückung, zu verbessern.

Erfindungsgemäß wird diese Aufgabe durch die Merkmale des Anspruches 1 gelöst, indem der Verschiebemechanismus zum gegenläufigen Verschieben der wenigstens zwei beweglichen Spannblöcke ausgebildet ist.

Die erfindungsgemäße Einspannvorrichtung zum Einspannen von wenigstens zwei Bearbeitungsgeräten für eine Probenvorbereitung besteht im Wesentlichen aus wenigstens vier in axialer Richtung angeordneten Spannblöcken, die wenigstens zwei Spannblockpaare mit jeweils zwei gegenläufig beweglichen Spannblöcke bilden, wobei jedes Spannblockpaar zur Aufnahme jeweils eines der Bearbeitungsgeräte zwischen den zwei gegenläufig beweglichen Spannblöcken ausgebildet ist und einem Verschiebemechanismus zum Verschieben der beweglichen Spannblöcke zwischen einer Öffnungsstellung zum Einsetzen der Bearbeitungsgeräte und einer Einspannstellung, in der die wenigstens zwei Bearbeitungsgeräte in axialer Richtung übereinander zwischen jeweils zwei Spannblöcken eingespannt sind. Der Verschiebemechanismus ist dabei zum gegenläufigen Verschieben der jeweils zwei gegenläufigen beweglichen Spannblöcke jedes Spannblockpaares ausgebildet und weist ein erstes Kopplungsmittel und ein zweites Kopplungsmittel auf, wobei jeweils ein beweglicher Spannblock jedes Spannblockpaares mit dem ersten Kopplungsmittel und der jeweils andere bewegliche Spannblock jedes Spannblockpaares mit dem zweiten Kopplungsmittel in Wirkkontakt stehen.

Als Bearbeitungsgeräte kommen beispielsweise Filter, Säulen oder Kartuschen zum Einsatz.

Diese Ausgestaltung eignet sich in besonderem Maße für eine automatisierte Bestückung bzw. Entnahme der Bearbeitungsgeräte, da das Bearbeitungsgerät mit einer Linearbewegung in die Einspannvorrichtung eingebracht bzw. entnommen werden kann.

Des Weiteren sind die beweglichen Spannblöcke vorzugsweise auf einem Führungsprofil gleitverschieblich gehaltert. Dabei können insbesondere das erste und das zweite Kopplungsmittel gegenläufig in der axialen Richtung verstellbar sein. Zur Realisierung der gegenläufigen Verschiebbarkeit der wenigstens zwei beweglichen Spannblöcke sind gemäß dem bevorzugten Ausführungsbeispiel das erste und das zweite Kopplungsmittel über einen an einem Angelpunkt aufgehängten, zweiseitigen Hebelarm miteinander verbunden. Der Verschiebemechanismus kann darüber hinaus einen Aktuator zum gegenläufigen Verstellen des ersten und des zweiten Kopplungsmittels aufweisen, wobei der Aktuator insbesondere zur Drehung des zweiseitigen Hebelarms um seinen Angelpunkt mit diesem in Wirkverbindung steht.

Gemäß einer weiteren Ausgestaltung der Erfindung steht wenigstens eine, vorzugsweise beide der beweglichen Spannblöcke jedes Spannblockpaares über wenigstens ein elastisches Ausgleichselement mit dem zugehörigen Kopplungsmittel in Verbindung. Auf diese Weise kann die auf das zwischen den Spannblöcken eines Spannblockpaares eingespannte Bearbeitungsgerät wirkende Einspannkraft begrenzt werden. Die Einspannkraft kann darüber hinaus durch das elastische Ausgleichselement individuell an das jeweilige Bearbeitungsgerät angepasst werden. So ist es insbesondere denkbar, dass bei übereinander angeordneten Spannblockpaaren elastische Ausgleichselemente mit unterschiedlichen Federkräften verwendet werden.

Gemäß einer weiteren Ausgestaltung der Erfindung können das erste und das zweite Kopplungsmittel stangenartig ausgebildet sein, wobei die beweglichen Spannblöcke Durchgangsbohrungen aufweisen, durch welche die stangenartig ausgebildeten Kopplungsmittel hindurchgeführt sind. Die beweglichen Spannblöcke sind dann beispielsweise über jeweils ein Mitnehmerelement mit einem der beiden Kopplungsmittel verbunden. Vorzugsweise sind jedoch zwei Mitnehmerelemente vorgesehen, sodass diese die beweglichen Spannblöcke in beiden Bewegungsrichtungen mitnehmen.

Je nach Art des zu verwendenden Bearbeitungsgerätes weist wenigstens eine der beweglichen Spannblöcke jedes Spannblockpaares ein Verschlusselement zum gas-und flüssigkeitsdichten Verschließen des Bearbeitungsgerätes auf.

Weitere Vorteile und Ausgestaltungen der Erfindung werden im Folgenden anhand der Beschreibung einiger Ausführungsbeispiele und der Zeichnung näher beschrieben.

In der Zeichnung zeichnen:
- Fig. 1a: eine Prinzipdarstellung der Einspannvorrichtung gemäß einem ersten Ausführungsbeispiel in der Öffnungsstellung,
- Fig. 1b: eine Prinzipdarstellung der Einspannvorrichtung gemäß Fig. 1a in der Einspannstellung,
- Fig. 2a: eine geschnittene Rückansicht der Einspannvorrichtung gemäß Fig. 1a,
- Fig. 2b: eine geschnittene Rückansicht der Einspannvorrichtung gemäß Fig. 1b,
- Fig. 3a: eine geschnittene Vorderansicht der Einspannvorrichtung gemäß Fig. 2a und
- Fig. 3b: eine geschnittene Vorderansicht der Einspannvorrichtung gemäß Fig. 2b.

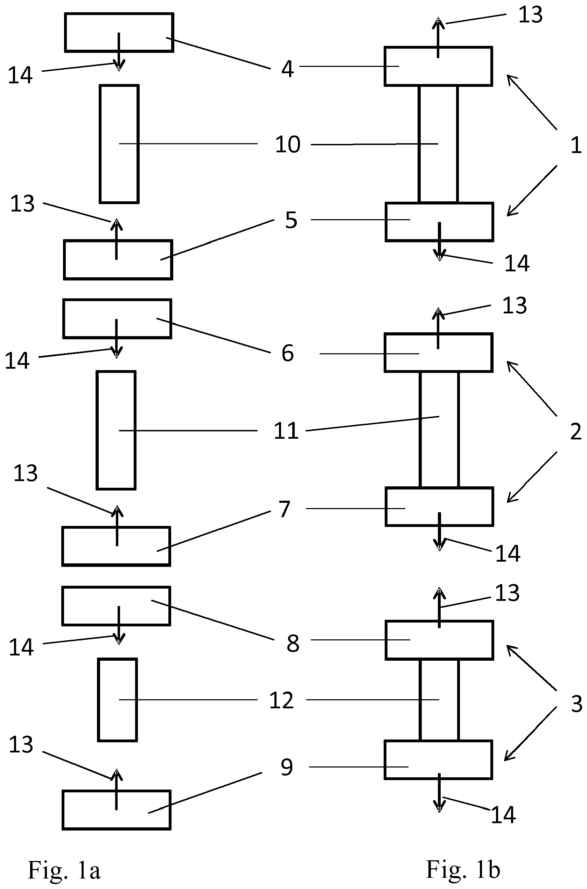

Fig. 1a zeigt eine Einspannvorrichtung gemäß einem ersten Ausführungsbeispiel. Sie weist drei Spannblockpaare 1, 2, 3 mit jeweils zwei beweglichen Spannblöcken 4, 5; 6, 7; 8, 9 auf, die in axialer Richtung übereinander angeordnet sind.

Ein hier nicht näher dargestellter Verschiebemechanismus dient zum Verschieben der beweglichen Spannblöcke 4 - 9 zwischen der in Fig. 1a gezeigten Öffnungsstellung zum Einsetzen jeweils eines Bearbeitungsgerätes 10, 11, 12 und einer in Fig. 1b gezeigten Einspannstellung, in der Bearbeitungsgeräte 10, 11, 12 in axialer Richtung übereinander zwischen jeweils zwei Spannblöcke eingespannt sind. Hierzu werden die Spannblöcke jedes Spannblockpaares gegenläufig, das heißt in entgegengesetzten Richtungen (Pfeile 13, 14) verschoben. Wird der Verschiebemechanismus von der in Fig. 1b gezeigten Einspannstellung in die in Fig. 1a gezeigte Öffnungsstellung betätigt, werden die Spannblöcke jedes Spannblockpaares wiederum gegenläufig verschoben, sodass sich der Abstand zwischen den zugehörigen Spannblöcken vergrößert und das Bearbeitungsgerät freigegeben wird.

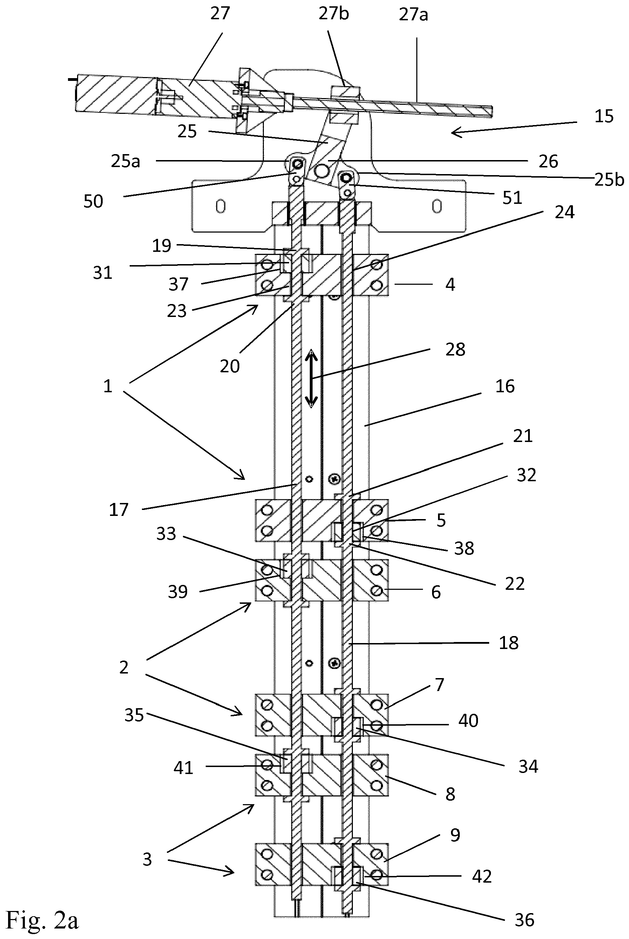

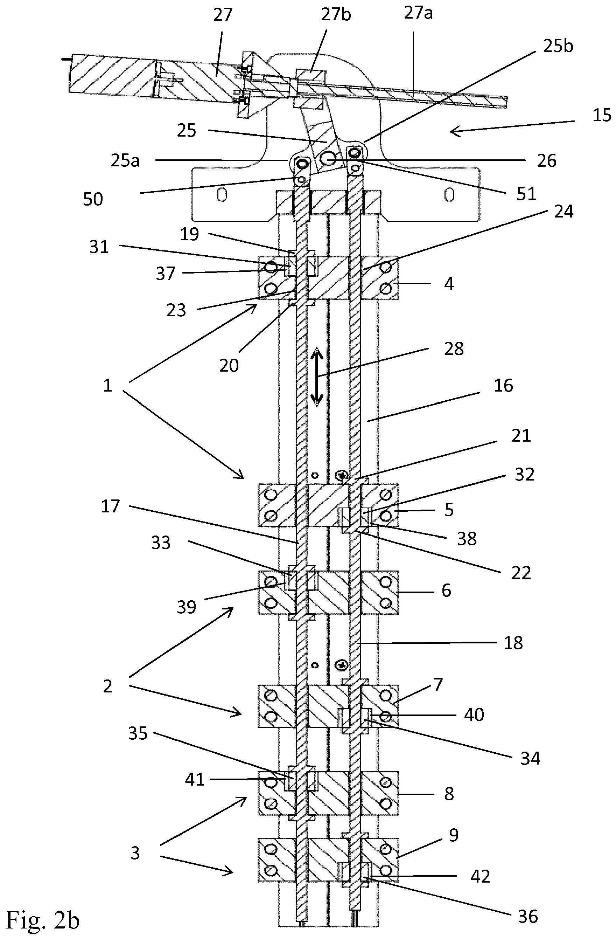

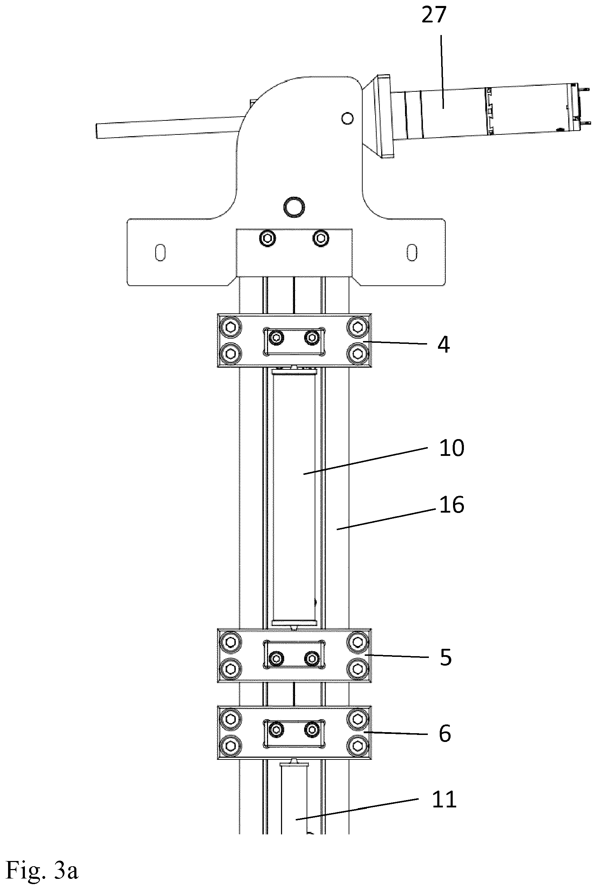

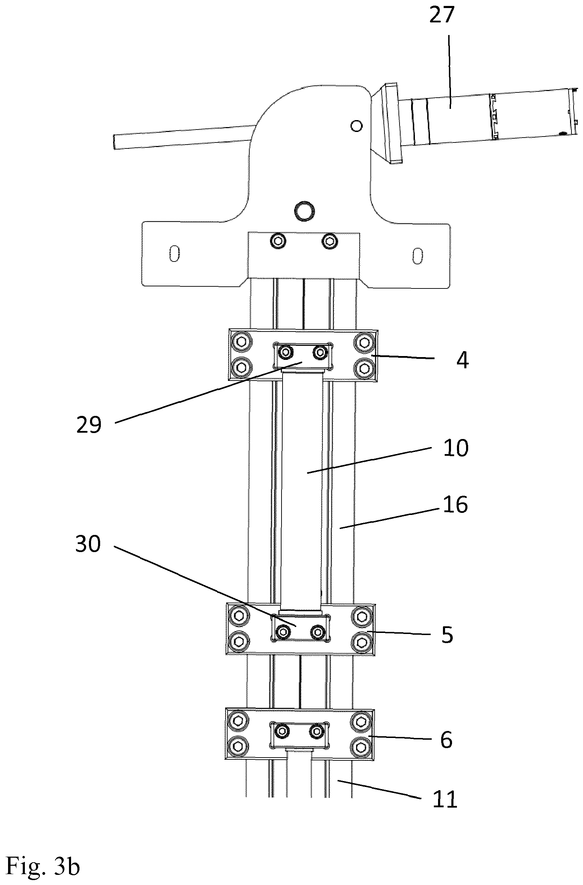

Im Folgenden wird anhand der Fig. 2a, 2b, 3a und 3b der Verschiebemechanismus 15 näher erläutert. Die Spannblöcke 4-9 sind auf einem Führungsprofil 16 gleitverschieblich gehaltert. Der Verschiebemechanismus weist ein erstes Kopplungsmittel 17 und ein zweites Kopplungsmittel 18 auf, welche stangenförmig ausgebildet sind und wobei jeweils ein beweglicher Spannblock jedes Spannblockpaares mit dem ersten Kopplungsmittel 17 und der jeweils andere bewegliche Spannblock jedes Spannblockpaares mit dem zweiten Kopplungsmittel in Wirkkontakt stehen. Im dargestellten Ausführungsbeispiel sind die Spannblöcke 4, 6 und 8 über jeweils zwei Mitnehmerelemente 19, 20 mit dem ersten Kopplungsmittel 17 verbunden, während die Spannblöcke 5, 7 und 9 über jeweils zwei Mitnehmerelemente 21, 22 mit dem zweiten Kopplungsmittel 18 verbunden sind. Jeder Spannblock ist mit zwei Durchgangsbohrungen 23, 24 versehen, durch welche die stangenartig ausgebildeten Kopplungsmittel 17, 18 hindurchgeführt sind. Das zweite Kopplungsmittel 18 ist durch die Spannblöcke 4, 6 und 8 lediglich hindurchgeführt und übt auf diese Spannblöcke keinen Mitnahmeeffekt aus. Im Bereich der Spannblöcke 5, 7 und 9 weist das zweite Kopplungsmittel 18 jeweils Mitnehmerelemente 21, 22 auf, die bei einer Bewegung des zweiten Kopplungsmittels 18 in Richtung seiner Erstreckung die Spannblöcke mitnehmen. In entsprechender Weise ist das erste Kopplungsmittel 17 durch die Spannblöcke 5, 7 und 9 ohne Mitnahmeeffekt lediglich hindurchgeführt, während es mit den Spannblöcken 4, 6 und 8 über die Mitnehmerelemente 19, 20 in Wirkkontakt steht.

Um die gegenläufige Bewegung der Spannblöcke jedes Spannblockpaares zu erreichen, müssen die beiden Kopplungsmitteln 17, 18 entsprechend gegenläufig betätigt werden. Dies geschieht dadurch, dass ein zweiseitiger Hebelarm 25 vorgesehen ist, der mit Hilfe eines Aktuators 27 um seinen Angelpunkt 26 drehbar ist. Das erste Kopplungsmittel 17 ist an einem ersten Hebelarm 25a des zweiseitigen Hebelarms 25 und das zweite Kopplungsmittel 18 an einem zweiten Hebelarm 25b des zweiseitigen Hebelarms 25 angelenkt. Die Kopplungsmittel 17, 18 sind dabei über Ausgleichsstücke 50, 51 gelenkig mit dem ersten Hebelarm 25a bzw. dem zweiten Hebelarm 25b verbunden.

Der Aktuator 27 ist beispielweise als Linearaktuator mit einem auf einer Spindel 27a verschiebbaren Mutter 27b ausgebildet. Die Mutter 27b steht wiederum mit dem zweiseitigen Hebelarm derart in Verbindung, dass eine Verschiebung der Mutter 27b auf der Spindel 27a eine Drehung des zweiseitigen Hebelarms 25 um seinen Angelpunkt 26 bewirkt, wie das bei Vergleich der beiden Fig. 2a und 2b ersichtlich ist. Eine Drehung des Hebelarms 25 um seinen Angelpunkt 26 bewirkt eine gegenläufige Verschiebung des ersten und zweiten Kopplungsmittels 17, 18 in axialer Richtung längs des Doppelpfeils 28. Bei einer Betätigung des Verschiebungsmechanismus 15 von der in der Fig. 2a gezeigten Öffnungsstellung in die in Fig. 2b gezeigte Einspannstellung wird das erste Kopplungsmittel zusammen mit den Spannblöcken 4, 6 und 8 nach unten und das zweite Kopplungsmittel zusammen mit den Spannblöcken 5, 7 und 9 nach oben bewegt, sodass sich der Abstand der einem Spannblockpaar zugehörigen Spannblöcke 4, 5; 6, 7; 8, 9 entsprechend verringert.

Die Fig. 3a und 3b zeigen die Situation auf der gegenüberliegenden Seite der Einspannvorrichtung, auf der die Bearbeitungsgeräte 10, 11, 12 angesetzt bzw. entnommen werden können. Jeweils ein Spannblock jedes Spannblockpaares weist ein erstes Halterungs- bzw. Verschlusselement 29 und der jeweils andere Spannblock ein zweites Halterungs- bzw. Verschlusselemente 30 auf, welches zum Haltern und/oder Verschließen des Bearbeitungsgerätes 10 ausgebildet ist. Üblicherweise ist das Bearbeitungsgerät an seiner oberen Seite offen ausgebildet, sodass das erste Halterungs- bzw. Verschlusselement 29 zum gas- und flüssigkeitsdichtem Verschließen des Bearbeitungsgerätes ausgebildet ist. Dabei kann das Halterungs- bzw. Verschlusselement 29 insbesondere als nicht selbsthemmender Kegel ausgebildet werden, der beim Zusammenführen der zugehörigen Spannblöcke einen gas- und flüssigkeitsdichten Verschluss des Bearbeitungsgerätes bewirkt. Das zweite Halterungs- bzw. Verschlusselement 30 dient meist nur zur Halterung des Bearbeitungsgerätes 10 und kann ebenfalls kegelförmig ausgebildet sein.

Damit die Bearbeitungsgeräte in der Einspannstellung einerseits mit einem ausreichenden Druck beaufschlagt werden, um die Gas- und Flüssigkeitsabdichtung zu gewährleisten und andererseits ine Beschädigung des Bearbeitungsgerätes zu einen zu hohen Druck vermieden wird, stehen die Spannblöcke über elastische Ausgleichselemente 31 - 36 mit dem ersten bzw. zweiten Kopplungsmittel 17, 18 in Wirkverbindung. Die elastischen Ausgleichselemente können beispielsweise als Spiralfedern oder Elastomer-Elemente ausgebildet sein. Prinzipiell wäre es ausreichend, wenn jeweils ein Spannblock eines Spannblockpaares mit einem solchen Ausgleichselement ausgestaltet ist. Die Federkraft der elastischen Ausgleichselemente wird an das einzuspannende Bearbeitungsgerät angepasst. Sind in den übereinander angeordneten Spannblockpaaren unterschiedliche Bearbeitungsgeräte gehaltert, können entsprechend auch unterschiedlich starke elastische Ausgleichselemente Verwendung finden. So kann gewährleistet werden, dass die Bearbeitungsgeräte nur mit dem Druck beaufschlagt werden, der für die Gas- und Flüssigkeitsabdichtung ausreicht, aber nicht zu einer Beschädigung desselben führt. Im dargestellten Ausführungsbeispiel sind die elastischen Ausgleichselemente in Aussparungen 37 bis 42 der Spannblöcke angeordnet, wobei die Achsen der Durchgangsbohrungen 23, 24, der Aussparungen 37 bis 42 sowie der beiden Kopplungsmittel fluchten.

Auch der zuvor beschriebene Verschiebemechanismus und das wenigstens eine jedem Spannblockpaar zugeordnete, elastische Ausgleichselement können entsprechend dem zuvor beschriebenen Ausführungsbeispiel auch hier Anwendung finden.

## Patentansprüche

1. Einspannvorrichtung zum Einspannen von wenigstens zwei Bearbeitungsgeräten (10, 11, 12) für eine Probenvorbereitung mit
- wenigstens vier in axialer Richtung angeordneten Spannblöcken (4 - 9), die wenigstens zwei Spannblockpaare (1-3) mit jeweils zwei gegenläufig beweglichen Spannblöcke (4, 5; 6, 7; 8, 9) bilden, wobei jedes Spannblockpaar zur Aufnahme jeweils eines der Bearbeitungsgeräte (10, 11, 12) zwischen den zwei gegenläufig beweglichen Spannblöcken ausgebildet ist;
**gekennzeichnet durch**
- einen Verschiebemechanismus (15) zum Verschieben der beweglichen Spannblöcke zwischen einer Öffnungsstellung zum Einsetzen der Bearbeitungsgeräte (10, 11, 12) und einer Einspannstellung, in der die wenigstens zwei Bearbeitungsgeräte in axialer Richtung übereinander zwischen jeweils zwei Spannblöcken (4 - 9) eingespannt sind, wobei der Verschiebemechanismus (15) zum gegenläufigen Verschieben der jeweils zwei gegenläufigen beweglichen Spannblöcke (4 - 9) jedes Spannblockpaares (1-3) ausgebildet ist, wobei der Verschiebemechanismus (15) ein erstes Kopplungsmittel (17) und ein zweites Kopplungsmittel (18) aufweist, wobei jeweils ein beweglicher Spannblock jedes Spannblockpaares (1 - 3) mit dem ersten Kopplungsmittel (17) und der jeweils andere bewegliche Spannblock jedes Spannblockpaares (1 - 3) mit dem zweiten Kopplungsmittel (18) in Wirkkontakt stehen.

2. Einspannvorrichtung nach Anspruch 1, **dadurch gekennzeichnet, dass** die beweglichen Spannblöcke (4-9) auf einem Führungsprofil (16) gleitverschieblich gehaltert sind.

3. Einspannvorrichtung nach Anspruch 1, **dadurch gekennzeichnet, dass** das erste und das zweite Kopplungsmittel (17, 18) gegenläufig in der axialen Richtung verstellbar sind.

4. Einspannvorrichtung nach Anspruch 1 oder 3, **dadurch gekennzeichnet, dass** das erste und das zweite Kopplungsmittel (17, 18) über einen an einem Angelpunkt (26) aufgehängten, zweiseitigen Hebelarm (25) miteinander verbunden sind.

5. Einspannvorrichtung nach Anspruch 1, **dadurch gekennzeichnet, dass** der Verschiebemechanismus (15) einen Aktuator (27) zum gegenläufigen Verstellen des ersten und des zweiten Kopplungsmittels (17, 18) aufweist.

6. Einspannvorrichtung nach Anspruch 4 und 5, **dadurch gekennzeichnet, dass** der Aktuator (27) zur Drehung des zweiseitigen Hebelarms (25) um seinen Angelpunkt (26) mit diesem in Wirkverbindung steht.

7. Einspannvorrichtung nach Anspruch 1, **dadurch gekennzeichnet, dass** wenigstens einer, vorzugsweise beide, der beweglichen Spannblöcke (4 - 9) jedes Spannblockpaares (1 - 3) über wenigstens ein elastisches Ausgleichselement (31 - 36) mit dem zugehörigen Kopplungsmittel (17, 18) in Verbindung steht.

8. Einspannvorrichtung nach Anspruch 1 oder 3, **dadurch gekennzeichnet, dass** das erste und das zweite Kopplungsmittel (17, 18) stangenartig ausgebildet ist und die beweglichen Spannblöcke (4 - 9) Durchgangsbohrungen (23, 24) aufweisen, durch welche die stangenartig ausgebildeten Kopplungsmittel (17, 18) hindurchgeführt sind.

9. Einspannvorrichtung nach Anspruch 1, **dadurch gekennzeichnet, dass** die beweglichen Spannblöcke (4 - 9) über jeweils wenigstens ein Mitnehmerelement (19 - 22) mit einem der beiden Kopplungsmittel (17, 18) in Verbindung stehen.

10. Einspannvorrichtung nach Anspruch 1, **dadurch gekennzeichnet, dass** wenigstens einer der beweglichen Spannblöcke (4 - 9) jedes Spannblockpaares (1 - 3) ein Verschlusselement (29 - 30) zum gas- und flüssigkeitsdichten Verschließen des Bearbeitungsgerätes (10 - 12) aufweist.

## Claims

1. A clamping device for clamping at least two processing devices (10, 11, 12) for a sample preparation, comprising
at least four clamping blocks (4 - 9) arranged in the axial direction, each forming at least two clamping block pairs (1 - 3) each provided with two of the clamping blocks (4, 5; 6, 7; 8, 9) which are movable in opposite directions, each clamping block pair being designed for accommodating a respective processing device (10, 11, 12) between the two oppositely movable clamping blocks.
**characterized in that** a displacement mechanism (15) for displacing the movable clamping blocks between an open position for inserting the processing devices (10, 11, 12), and a clamping position in which the at least two processing devices are clamped one on top of the other in the axial direction between two clamping blocks (4 - 9) in each case, whereby the displacement mechanism (15) is designed for displacing in opposite directions the two movable clamping blocks (4-9) of each clamping block pairs (1-3), the clamping blocks being movable in opposite directions, whereby the displacement mechanism (15) has a first coupling means (17) and a second coupling means (18), in each case a movable clamping block of each clamping block pair (1 - 3) being in operative contact with the first coupling means (17), and the respective other movable clamping block of each clamping block pair (1 - 3) being in operative contact with the second coupling means (18).

2. The clamping device according to Claim 1, **characterized in that** the movable clamping blocks (4 - 9) are slidably supported on a guide profile (16).

3. The clamping device according to Claim 1, **characterized in that** the first and the second coupling means (17, 18) are displaceable in opposite directions in the axial direction.

4. The clamping device according to Claims 1 or 3, **characterized in that** the first and the second coupling means (17, 18) are connected to one another via a two-sided lever arm (25) that is suspended on a pivot point (26).

5. The clamping device according to Claim 1, **characterized in that** the displacement mechanism (15) has an actuator (27) for displacing the first and the second coupling means (17, 18) in opposite directions.

6. The clamping device according to Claims 4 and 5, **characterized in that** the actuator (27) is in operative connection with the two-sided lever arm (25) in order to rotate it about its pivot point (26).

7. The clamping device according to Claim 1, **characterized in that** at least one, preferably both of, the movable clamping blocks (4 - 9) of each clamping block pair (1 - 3) is/are connected to the associated coupling means (17, 18) via at least one elastic compensation element (31 - 36).

8. The clamping device according to Claim 1 or 3, **characterized in that** the first and the second coupling means (17, 18) have a rod-like design, and the movable clamping blocks (4 - 9) have through holes (23, 24) through which the rod-like coupling means (17, 18) are passed.

9. The clamping device according to Claim 1, **characterized in that** the movable clamping blocks (4 - 9) are connected to one of the two coupling means (17, 18) in each case via at least one carrier element (19 - 22).

10. The clamping device according to Claim 1, **characterized in that** at least one of the movable clamping blocks (4-9) of each clamping block pair (1-3) has a closure element (29 - 30) for closing the processing device (10 - 12) in a gas- and liquid-tight manner.

## Revendications

1. Dispositif de serrage servant au serrage d'au moins deux appareils d'usinage (10, 11, 12) pour une préparation d'échantillons, ledit dispositif de serrage comprenant
- au moins quatre blocs de serrage (4 - 9) disposés dans la direction axiale, blocs de serrage qui forment au moins deux paires de blocs de serrage (1 - 3) comprenant à chaque fois deux blocs de serrage (4, 5 ; 6, 7 ; 8, 9) mobiles en sens opposé, où chaque paire de blocs de serrage est configurée pour recevoir à chaque fois, entre les deux blocs de serrage mobiles en sens opposé, l'un des appareils d'usinage (10, 11, 12) ;
**caractérisé par** un mécanisme de déplacement (15) servant au déplacement des blocs de serrage mobiles, ledit déplacement se produisant entre une position d'ouverture servant à l'introduction des appareils d'usinage (10, 11, 12), et une position de serrage dans laquelle les appareils d'usinage au moins au nombre de deux sont serrés l'un au-dessus de l'autre, dans la direction axiale, à chaque fois entre deux blocs de serrage (4 - 9), où le mécanisme de déplacement (15) est conçu pour le déplacement en sens opposé à chaque fois des deux blocs de serrage (4 - 9) de chaque paire de blocs de serrage (1 - 3), lesdits blocs de serrage étant mobiles en sens opposé, où le mécanisme de déplacement (15) présente un premier moyen de couplage (17) et un deuxième moyen de couplage (18), où à chaque fois un bloc de serrage mobile de chaque paire de blocs de serrage (1 - 3) est en contact actif avec le premier moyen de couplage (17), l'autre bloc de serrage mobile de chaque paire de blocs de serrage (1 - 3) étant à chaque fois en contact actif avec le deuxième moyen de couplage (18).

2. Dispositif de serrage selon la revendication 1, **caractérisé en ce que** les blocs de serrage mobiles (4 - 9) sont retenus en étant mobiles par glissement sur un profilé de guidage (16).

3. Dispositif de serrage selon la revendication 1, **caractérisé en ce que** le premier moyen et le deuxième moyen de couplage (17, 18) peuvent être déplacés en sens opposé dans la direction axiale.

4. Dispositif de serrage selon la revendication 1 ou 3, **caractérisé en ce que** le premier moyen et le deuxième moyen de couplage (17, 18) sont reliés l'un à l'autre par un bras de levier (25) à deux côtés, en suspension au niveau d'un point pivot (26).

5. Dispositif de serrage selon la revendication 1, **caractérisé en ce que** le mécanisme de déplacement (15) présente un actionneur (27) servant au déplacement en sens opposé du premier moyen et du deuxième moyen de couplage (17, 18).

6. Dispositif de serrage selon les revendications 4 et 5, **caractérisé en ce que** l'actionneur (27) servant à la rotation du bras de levier (25) à deux côtés autour de son point pivot (26) est en liaison active avec celui-ci.

7. Dispositif de serrage selon la revendication 1, **caractérisé en ce qu'**au moins l'un des blocs de serrage mobiles (4 - 9) - de préférence les deux - de chaque paire de blocs de serrage (1 - 3) est en liaison avec le moyen de couplage associé (17, 18), par au moins un élément de compensation élastique (31 - 36).

8. Dispositif de serrage selon la revendication 1 ou 3, **caractérisé en ce que** le premier moyen et le deuxième moyen de couplage (17, 18) sont configurés en forme de tige, et les blocs de serrage mobiles (4 - 9) présentent des trous de passage (23, 24) à travers lesquels sont guidés les moyens de couplage (17, 18) configurés en forme de tige.

9. Dispositif de serrage selon la revendication 1, **caractérisé en ce que** les blocs de serrage mobiles (4 - 9) sont en liaison avec l'un des deux moyens de couplage (17, 18), à chaque fois par au moins un élément d'entraînement (19 - 22).

10. Dispositif de serrage selon la revendication 1, **caractérisé en ce qu'**au moins l'un des blocs de serrage mobiles (4 - 9) de chaque paire de blocs de serrage (1 - 3) présente un élément de fermeture (29 - 30) servant à la fermeture de l'appareil d'usinage (10 - 12), ladite fermeture étant étanche aux gaz et aux liquides.
